# EUROPÄISCHE PATENTSCHRIFT

(11) **EP 3 925 840 B1**
(45) Veröffentlichungstag und Bekanntmachung des Hinweises auf die Patenterteilung: **08.11.2023**
(21) Anmeldenummer: 21175646.5
(22) Anmeldetag: 25.05.2021
(51) Int. Cl.: B60T 17/00, B60T 17/04, B60T 17/22, B60T 13/26

(54) **KRAFTFAHRZEUG MIT DRUCKLUFTSYSTEM**
MOTOR VEHICLE WITH COMPRESSED AIR SYSTEM
VÉHICULE AUTOMOBILE POURVU DE SYSTÈME À AIR COMPRIMÉ

(30) Priorität: 16.06.2020 DE 102020115787
(43) Veröffentlichungstag der Anmeldung: 22.12.2021
(73) Patentinhaber: MAN Truck & Bus SE, 80995 München (DE)
(72) Erfinder: Haas, Roman, 85221 Dachau (DE); Petrov, Anton, 85276 Pfaffenhofen (DE); Kondic, Darko, 82216 Gernlinden (DE); Kusch, Willi, 88239 Wangen im Allgäu (DE)
(74) Vertreter: v. Bezold & Partner Patentanwälte - PartG mbB

(56) Entgegenhaltungen:
- EP-A1- 1 396 406
- EP-A2- 0 165 376
- DE-A1- 3 412 979
- DE-A1- 10 003 869
- DE-A1- 19 939 200

## Beschreibung

Die Erfindung betrifft ein Kraftfahrzeug mit Druckluftsystemen und Druckluftverbraucherkreisen.

Nutzfahrzeuge zeichnen sich üblicherweise durch ein komplexes Druckluftsystem aus. Dieses wird zum Betrieb des Nutzfahrzeuges benötigt. Üblicherweise besteht das System im Wesentlichen aus bis zu vier verschiedenen Druckluftkreisläufen, nämlich einem Bremssystem Vorderachse / Luftfederung Vorderachse (Kreis 1), einem Bremssystem Hinterachse / Luftfederung Hinterachse (Kreis 2), einem Anhängerbetrieb (Kreis 3) und einer Fahrerhaus-Versorgung (Kreis 4). Diese Kreisläufe benötigen für ihren Betrieb entsprechende Komponenten (Steuereinheiten, Ventile usw.). Diese Komponenten sind im Fahrzeug größtenteils einzeln verbaut und durch entsprechende Druckluftleitungen miteinander verbunden. Dies erschwert eine effiziente Montage, da man die Komponenten an verschiedenen Montagepositionen in der Produktion verbaut, und anschließend miteinander verbinden muss. Die große Anzahl an Druckluft-Verbindungsleitungen wird im Leiterrahmen und mit speziellen Haltern "kreuz und quer" im Fahrzeug verlegt. Herkömmlich ist zudem ein einziger Luftpresser vorgesehen. Der Luftpresser ist an den Verbrennungsmotor gekoppelt und über einen mechanischen Abtrieb (bspw. Zahnrad oder Riemen) angetrieben. Somit ist die Position des Luftpresser durch den Verbrennungsmotor vorgegeben und die Gestaltungsfreiräume im Fahrzeugpackage sind stark eingeschränkt.

Die EP 0 165 376 B1 offenbart in diesem Zusammenhang eine Drucklufteinrichtung mit einem Hochdruckkreis und einem Niederdruckkreis für eine Luftfeder oder Bremsanlage in einem Kraftfahrzeug. Von Hochdruckverbrauchern, wie z.B. Luftfedern oder Bremszylindern, wird verbrauchte Luft nicht wie üblich in die Atmosphäre abgeleitet, sondern über eine Umschalteinrichtung teilweise dem Kreis mit dem niedrigeren Druck zugeführt. Durch Rückgewinnung von Luft aus dem Hochdruckkreis zwecks Wiederverwendung in dem Niederdruckkreis wird Energie eingespart.

Der Erfindung liegt die Aufgabe zu Grunde, ein alternatives und/oder verbessertes Druckluftsystem für ein Kraftfahrzeug, vorzugsweise Nutzfahrzeug, zu schaffen.

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Offenbarung betrifft ein (z. B. elektrisch angetriebenes) Kraftfahrzeug, vorzugsweise Nutzfahrzeug (z. B. Lastkraftwagen oder Omnibus). Das Kraftfahrzeug weist ein erstes Druckluftsystem auf, das einen ersten elektrisch angetriebenen Luftverdichter, eine erste Druckluftaufbereitung (z. B. aufweisend Lufttrockner und/oder Luftfilter) und eine erste Ventileinrichtung aufweist. Das Kraftfahrzeug weist ein zweites Druckluftsystem auf, das einen zweiten elektrisch angetriebenen Luftverdichter, eine zweite Druckluftaufbereitung (z. B. aufweisend Lufttrockner und/oder Luftfilter) und eine zweite Ventileinrichtung aufweist. Das Kraftfahrzeug weist mindestens einen ersten Druckluftverbraucherkreis, der an der ersten Ventileinrichtung (z. B. direkt oder indirekt) angeschlossen ist (z. B. zur Versorgung mit Druckluft von dem ersten Druckluftsystem) und mindestens einen zweiten Druckluftverbraucherkreis, der an der zweiten Ventileinrichtung (z. B. direkt oder indirekt) angeschlossen ist (z. B. zur Versorgung mit Druckluft von dem ersten Druckluftsystem), auf.

Der elektrische Antrieb der Luftverdichter kann ermöglichen, dass eine Position des Luftverdichters im Kraftfahrzeug nicht mehr an eine andere Komponente, insbesondere Verbrennungskraftmaschine, gebunden ist, da die elektrische Energieversorgung überall möglich ist. Bevorzugt ist das Kraftfahrzeug sogar elektrisch angetrieben und weist gar keine Verbrennungskraftmaschine auf. Vorteilhaft wird die elektrische Druckluftversorgungseinheit dupliziert, nämlich als das erste Druckluftsystem und das zweite Druckluftsystem. Dafür können die einzelnen Komponenten der beiden Druckluftsysteme verkleinert werden. So können beispielsweise zwei kleinere Luftverdichter anstelle eines großen Luftverdichters genutzt werden. Auch die weiteren Komponenten, wie z. B. die Druckluftaufbereitung und Schutzventile usw. können dupliziert und verkleinert werden. Durch diese Anpassungen können nun viele notwendige Druckluftkomponenten so im Fahrzeug positioniert werden, dass eine modulare Anordnung bzw. ein modularer Einbau möglich sind. Der Aufwand zum Verbinden und Montieren der Druckluftkomponenten und -Leitungen in der Hauptmontage kann dadurch erheblich reduziert werden. Dies wirkt sich auch positiv für den Package-Bauraum aus, da vorteilhaft nur noch wenige Leitungen verlegt werden müssen. Weitere Vorteile können bspw. eine Gewichtsreduktion (z. B. zwei kleine Luftverdichter statt einem großen Luftverdichter usw.), eine Package Optimierung (z. B. mehrere kleine Komponenten statt wenige große Komponenten) und/oder ein Energiemanagement-Vorteil (z. B. zwei kleine Luftverdichter, die bedarfsoptimal gesteuert werden können) sein. Es können zweckmäßig zudem geringere Anforderungen an die funktionale Sicherheit, ein Servicevorteil (Modulwartung, Modul-Ein- und Ausbau) und eine Skalierbarkeit je nach Fahrzeuganforderungen möglich sein.

In einem Ausführungsbeispiel weist der mindestens eine erste Druckluftverbraucherkreis einen Vorderachsbetriebsbremskreis und/oder einen Nebenverbraucherkreis, der vorzugsweise einer pneumatische Fahrerhauslagerung des Kraftfahrzeugs und/oder einer pneumatisch betätigten Kupplung des Kraftfahrzeugs zugeordnet ist, auf.

In einem weiteren Ausführungsbeispiel weist der mindestens eine zweite Druckluftverbraucherkreis einen Hinterachsbetriebsbremskreis und/oder einen Feststellbremskreis, vorzugsweise zusätzlich mit einem Anhängerbremskreis, auf.

Es ist möglich, dass dem Vorderachsbetriebsbremskreis zusätzlich eine Vorderachsluftfederung zugeordnet ist, und/oder dass dem Hinterachsbetriebsbremskreis zusätzlich eine Hinterachsluftfederung zugeordnet ist.

In einem weiteren Ausführungsbeispiel ist die erste Ventileinrichtung als ein Zweikreisschutzventil ausgeführt, und/oder die zweite Ventileinrichtung ist als ein Zweikreisschutzventil ausgeführt. Damit kann bspw. auf ein herkömmliches, komplexes Vierkreisschutzventil verzichtet werden.

In einer Ausführungsform sind das erste Druckluftsystem und das zweite Druckluftsystem fluidisch voneinander getrennt oder trennbar.

In einer weiteren Ausführungsform sind das erste Druckluftsystem und das zweite Druckluftsystem räumlich und/oder funktional voneinander getrennt angeordnet. Die Anordnung kann somit bevorzugt nahe der jeweiligen Komponenten der zu versorgenden Druckluftverbraucherkreise gewählt werden.

In einer Ausführungsvariante ist das erste Druckluftsystem in einem vorderen Bereich des Kraftfahrzeugs oder einem Vorderwagen des Kraftfahrzeugs angeordnet, vorzugsweise zwischen zwei parallelen Hauptlängsträgern eines Fahrzeugrahmens (z. B. Leiterrahmens) des Kraftfahrzeugs, und/oder das zweite Druckluftsystem ist in einem hinteren Bereich des Kraftfahrzeugs oder einem Hinterwagen des Kraftfahrzeugs angeordnet, vorzugsweise zwischen zwei parallelen Hauptlängsträgern eines Fahrzeugrahmens (z. B. Leiterrahmens) des Kraftfahrzeugs. Das erste Druckluftsystem kann somit nahe der Vorderachse zur Versorgung des Vorderachsbetriebsbremskreises und nahe des Fahrerhauses zur Versorgung des Nebenverbraucherkreises angeordnet sein. Das zweite Druckluftsystem kann somit nahe der Hinterachse zur Versorgung des Hinterachsbetriebsbremskreises, des Feststellbremskreises und des Anhängerbremskreises angeordnet sein.

In einer weiteren Ausführungsvariante ist der erste Luftverdichter und/oder der zweite Luftverdichter als ein Niedrigvolt-Luftverdichter ausgeführt, vorzugsweise mit einer Betriebsspannung ≤ 60 V Gleichspannung. Zweckmäßig kann sich so ein Sicherheitsvorteil ergeben, da zwei kleine Niedrigvolt-Luftverdichter statt einem großem Hochvolt-Luftverdichter verwendet werden.

In einem Ausführungsbeispiel weist das Kraftfahrzeug ferner eine, vorzugsweise bidirektionale oder unidirektionale, Druckluftverbindungsleitung auf, mittels der das erste Druckluftsystem und das zweite Druckluftsystem miteinander verbindbar sind, vorzugsweise ventilgesteuert. So kann bspw. eine Druckluftnotversorgung bei einem fehlerhaften Druckluftsystem bzw. eine Redundanz für die Druckluftsysteme gewährleistet werden.

In einer Weiterbildung mündet die Druckluftverbindungsleitung in einen Leitungsabschnitt des ersten Druckluftsystems stromaufwärts der ersten Ventileinrichtung oder ist an die erste Ventileinrichtung angeschlossen. Alternativ oder zusätzlich kann die Druckluftverbindungsleitung bspw. in einen Leitungsabschnitt des zweiten Druckluftsystems stromaufwärts der zweiten Ventileinrichtung münden oder an die zweite Ventileinrichtung angeschlossen sein.

In einem weiteren Ausführungsbeispiel ist der mindestens eine erste Druckluftverbraucherkreis bei einer Fehlfunktion des ersten Druckluftsystems mittels der Druckluftverbindungsleitung von dem zweiten Druckluftsystem mit Druckluft versorgbar, und/oder der mindestens eine zweite Druckluftverbraucherkreis ist bei einer Fehlfunktion des zweiten Druckluftsystems mittels der Druckluftverbindungsleitung von dem ersten Druckluftsystem mit Druckluft versorgbar.

In einer Ausführungsform weist das erste Druckluftsystem eine erste Teilsteuereinheit einer elektronischen Bremssteuerung zum Steuern des ersten Luftverdichters und/oder der ersten Ventileinrichtung auf, und/oder das zweite Druckluftsystem weist eine zweite Teilsteuereinheit einer elektronischen Bremssteuerung zum Steuern des zweiten elektrisch angetriebenen Luftverdichters und/oder der zweiten Ventileinrichtung auf. Die Teilsteuereinheiten können bspw. einen autarken Betrieb des jeweiligen Druckluftsystems und/oder eine eigenständige Prüffähigkeit des jeweiligen Druckluftsystems ermöglichen.

In einer weiteren Ausführungsform weist das Kraftfahrzeug ferner eine Hauptsteuereinheit der elektronischen Bremssteuerung, die in Kommunikationsverbindung mit der ersten Teilsteuereinheit und/oder der zweiten Teilsteuereinheit ist, auf. Somit können effizient die gewünschten Bremsdrücke an der Vorderachse und der Hinterachse angepasst werden. Die Hauptsteuereinheit kann hierbei eine Koordinierung zwischen den beiden Teilsteuereinheiten ermöglichen.

In einer Ausführungsvariante ist das erste Druckluftsystem als ein eigenes bauliches Modul, das in dem Kraftfahrzeug eingebaut ist, ausgeführt, und/oder das zweite Druckluftsystem ist als ein eigenes bauliches Modul, das in dem Kraftfahrzeug eingebaut ist, ausgeführt. Der modulare Aufbau kann die Montage im Fahrzeug vereinfachen.

In einer weiteren Ausführungsvariante weist das erste Druckluftsystem ferner einen ersten Druckluftspeicher, der vorzugsweise einem Vorderachsbetriebsbremskreis des Kraftfahrzeugs zugeordnet ist, auf. Alternativ oder zusätzlich kann das zweite Druckluftsystem ferner einen zweiten Druckluftspeicher aufweisen, der vorzugsweise einem Hinterachsbetriebsbremskreis und/oder einem Anhängerbremskreis des Kraftfahrzeugs zugeordnet ist.

Die vorliegende Offenbarung betrifft auch ein Verfahren zur Druckluftversorgung eines Kraftfahrzeugs wie hierin offenbart. Das Verfahren weist ein Versorgen des mindestens einen ersten Druckluftverbraucherkreises mittels des ersten Druckluftsystems und ein Versorgen des mindestens einen zweiten Druckluftverbraucherkreises mittels des zweiten Druckluftsystems auf.

In einer Weiterbildung weist das Verfahren ein Versorgen des mindestens einen ersten Druckluftverbraucherkreises mittels des zweiten Druckluftsystems (z. B.) bei einer Fehlfunktion des ersten Druckluftsystems auf (z. B. mittels der Druckluftverbindungsleitung). Alternativ oder zusätzlich kann das Verfahren ein Versorgen des mindestens einen zweiten Druckluftverbraucherkreises mittels des ersten Druckluftsystems (z. B.) bei einer Fehlfunktion des zweiten Druckluftsystems aufweisen (z. B. mittels der Druckluftverbindungsleitung).

Vorzugsweise kann sich der Begriff "Steuereinheit" auf eine Elektronik (z. B. mit Mikroprozessor(en) und Datenspeicher) und/oder eine mechanische, pneumatische und/oder hydraulische Steuerung beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Darstellung von zwei Druckluftsystemen für ein Kraftfahrzeug; und
- Figur 2: eine schematische Draufsicht auf einen Fahrzeugrahmen eines Kraftfahrzeugs mit zwei Druckluftsystemen.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

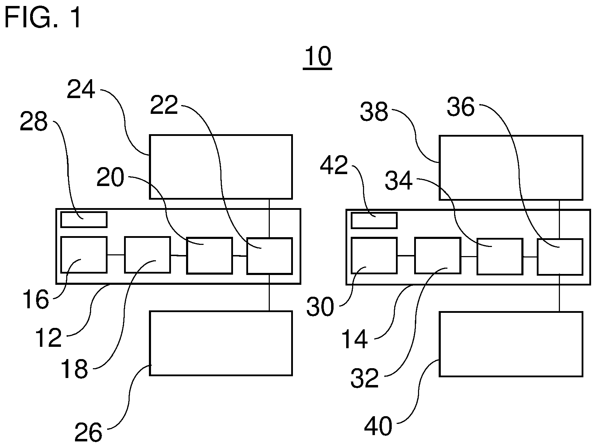

Figur 1 zeigt eine Vorrichtung 10 zur Drucklufterzeugung für ein Kraftfahrzeug. Das Kraftfahrzeug ist bevorzugt ein Nutzfahrzeug, z. B. ein Lastkraftwagen oder ein Omnibus. Bevorzugt ist das Kraftfahrzeug ein Elektrofahrzeug oder ein Hybridfahrzeug.

Die Vorrichtung 10 weist ein erstes Druckluftsystem 12 und ein zweites Druckluftsystem 14 auf. Beide Druckluftsysteme 12, 14 dienen zum Versorgen unterschiedlicher Verbraucher mit Druckluft.

Das erste Druckluftsystem 12 weist einen ersten Luftverdichter 16, eine erste Druckluftaufbereitung 18, einen optionalen ersten Druckluftspeicher 20 und eine erste Ventileinrichtung 22 auf.

Der erste Luftverdichter 16 ist dazu ausgebildet, Umgebungsluft anzusaugen und zu verdichten, z. B. in einen Bereich um 10 bar. Der erste Luftverdichter 16 weist einen Elektroantrieb zum Antreiben eines Verdichterabschnitts des ersten Luftverdichters 16 auf. Bevorzugt ist der erste Luftverdichter 16 an eine Niedrigvolt-Gleichspannungsquelle zur Energieversorgung angeschlossen.

Die erste Druckluftaufbereitung 18 ist stromabwärts des ersten Luftverdichters 16 angeordnet. Die erste Druckluftaufbereitung 18 empfängt Druckluft von dem ersten Luftverdichter 16. Die erste Druckluftaufbereitung 18 kann die Druckluft zur Speicherung und/oder weiteren Verwendung aufbereiten. Beispielsweise kann die erste Druckluftaufbereitung 18 einen Lufttrockner und/oder einen Luftfilter aufweisen.

Der erste Druckluftspeicher 20 ist stromabwärts der ersten Druckluftaufbereitung 18 angeordnet. Der erste Druckluftspeicher 20 kann einen oder mehrere Druckluftbehälter aufweisen. Im ersten Druckluftspeicher 20 kann Druckluft gespeichert werden. Der erste Druckluftspeicher 20 kann beispielsweise einen Druckluftbehälter aufweisen, der einem Vorderachsbetriebsbremskreis zugeordnet ist, vorzugsweise mit einem Volumen von 30 I oder mehr.

Die erste Ventileinrichtung 22 ist stromabwärts von der ersten Druckluftaufbereitung 18 und dem ersten Druckluftspeicher 20 angeordnet. Die erste Ventileinrichtung 22 kann die von der ersten Druckluftaufbereitung 18 und dem ersten Druckluftspeicher 20 zur Verfügung gestellte Druckluft wie gewünscht zu Druckluftverbraucherkreisen 24, 26 verteilen. Vorzugsweise ist die erste Ventileinrichtung 22 als ein Zweikreisschutzventil ausgeführt. Der Druckluftverbraucherkreis 24 kann vorzugsweise als ein Vorderachsbetriebsbremskreis ausgeführt sein. Der Druckluftverbraucherkreis 26 kann vorzugsweise als ein Nebenverbraucherkreis ausgeführt sein. Der Nebenverbraucherkreis kann pneumatisch betätigte Nebenverbraucher des Kraftfahrzeugs aufweisen, zum Beispiel eine Fahrerhauslagerung oder eine Getriebekupplung.

Das erste Druckluftsystem 12 kann ferner eine erste Steuereinheit 28 aufweisen, die bevorzugt den ersten Luftverdichter 16 und/oder die erste Ventileinrichtung 22 steuert. Die erste Steuereinheit 28 ist vorzugsweise eine Teilsteuereinheit einer elektronischen Bremssteuerung des Kraftfahrzeugs.

Das erste Druckluftsystem 12 kann weitere Komponenten aufweisen, wenn gewünscht. Beispielsweise kann das erste Druckluftsystem 12 noch Magnetventile für die Nebenverbraucher des Druckluftverbraucherkreises 26 und/oder Druckluft-/Prüfanschlüsse aufweisen. Das erste Druckluftsystem 12 kann auch mindestens eine Komponente eines elektronischen Luftfederungssystems einer Vorderachse des Kraftfahrzeugs aufweisen.

Das zweite Druckluftsystem 14 weist einen zweiten Luftverdichter 30, eine zweite Druckluftaufbereitung 32, einen optionalen zweiten Druckluftspeicher 34 und eine zweite Ventileinrichtung 36 auf.

Der zweite Luftverdichter 30 ist dazu ausgebildet, Umgebungsluft anzusaugen und zu verdichten, z. B. in einen Bereich um 10 bar. Der zweite Luftverdichter 30 weist einen Elektroantrieb zum Antreiben eines Verdichterabschnitts des zweiten Luftverdichters 30 auf. Bevorzugt ist der zweite Luftverdichter 30 an eine Niedrigvolt-Gleichspannungsquelle zur Energieversorgung angeschlossen.

Die zweite Druckluftaufbereitung 32 ist stromabwärts des zweiten Luftverdichters 30 angeordnet. Die zweite Druckluftaufbereitung 32 empfängt Druckluft von dem zweiten Luftverdichter 30. Die zweite Druckluftaufbereitung 32 kann die Druckluft zur Speicherung und/oder weiteren Verwendung aufbereiten. Beispielsweise kann die zweite Druckluftaufbereitung 32 einen Lufttrockner und/oder einen Luftfilter aufweisen.

Der zweite Druckluftspeicher 34 ist stromabwärts der zweiten Druckluftaufbereitung 32 angeordnet. Der zweite Druckluftspeicher 34 kann einen oder mehrere Druckluftbehälter aufweisen. Im zweiten Druckluftspeicher 34 kann Druckluft gespeichert werden. Der zweite Druckluftspeicher 34 kann beispielsweise einen Druckluftbehälter aufweisen, der einem Hinterachsbetriebsbremskreis (für eine erste Hinterachse) zugeordnet ist, vorzugsweise mit einem Volumen von 40 I oder mehr. Der zweite Druckluftspeicher 34 kann optional einen weiteren Druckluftbehälter aufweisen, der bei einer doppelachsigen Hinterachse zusätzlich der Hinterachsbetriebsbremse zugeordnet ist, vorzugsweise mit einem Volumen von 30 I oder mehr. Es ist auch möglich, dass der zweite Druckluftspeicher 34 einen Druckluftbehälter für einen Anhängerbremskreis aufweist.

Die zweite Ventileinrichtung 36 ist stromabwärts von der zweiten Druckluftaufbereitung 32 und dem zweiten Druckluftspeicher 34 angeordnet. Die zweite Ventileinrichtung 36 kann die von der zweiten Druckluftaufbereitung 32 und dem zweiten Druckluftspeicher 34 zur Verfügung gestellte Druckluft wie gewünscht zu den Druckluftverbraucherkreisen 38, 40 verteilen. Vorzugsweise ist die Ventileinrichtung 36 als ein Zweikreisschutzventil ausgeführt. Der Druckluftverbraucherkreis 38 kann vorzugsweise als ein Hinterachsbetriebsbremskreis ausgeführt sein. Der Druckluftverbraucherkreis 40 kann vorzugsweise als ein (z. B. Hinterachs-) Feststellbremskreis und/oder Anhängerbremskreis ausgeführt sein.

Das zweite Druckluftsystem 14 kann ferner eine zweite Steuereinheit 42 aufweisen, die bevorzugt den zweiten Luftverdichter 30 und/oder die zweite Ventileinrichtung 36 steuert. Die zweite Steuereinheit 42 ist vorzugsweise eine Teilsteuereinheit einer elektronischen Bremssteuerung des Kraftfahrzeugs.

Das zweite Druckluftsystem 14 kann weitere Komponenten aufweisen, wenn gewünscht. Beispielsweise kann das erste Druckluftsystem 12 noch einen Druckminderer, der dem Feststellbremskreis und/oder dem Anhängerbremskreis zugeordnet ist, und/oder Druckluft-/Prüfanschlüsse aufweisen. Das erste Druckluftsystem 12 kann auch mindestens eine Komponente eines elektronischen Luftfederungssystems mindestens einer Hinterachse des Kraftfahrzeugs aufweisen.

Das erste Druckluftsystem 12 und das zweite Druckluftsystem 14 können bei der Produktion als Module vormontiert und vorgruppiert werden. Die einzelnen Komponenten der Druckluftsysteme 12, 14 können funktional miteinander verbunden werden, bevor das jeweilige Druckluftsystem 12, 14 im Kraftfahrzeug eingebaut und bspw. über zentrale Steuerungsschnittstellen (z. B. 24 V) angeschlossen wird.

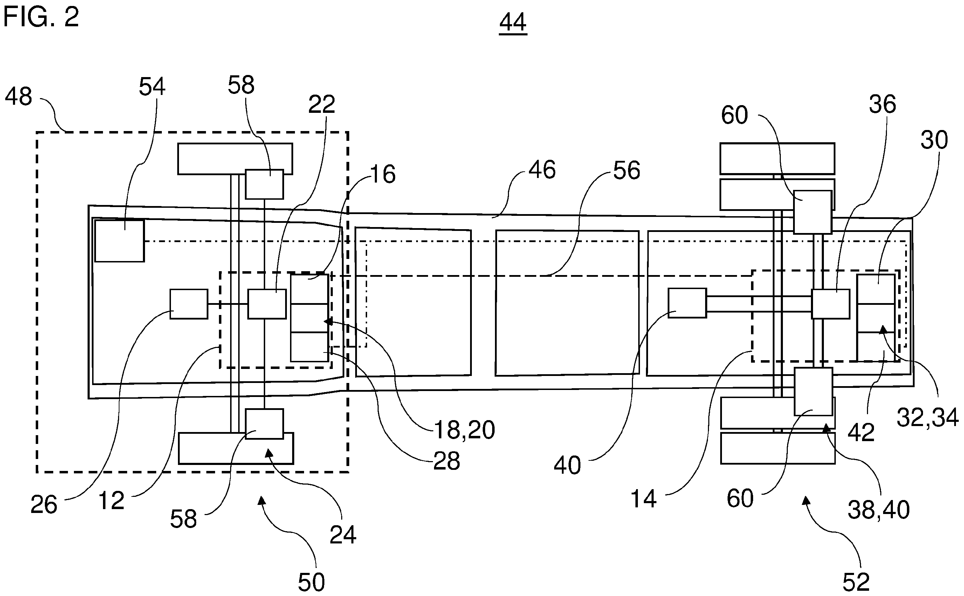

Figur 2 zeigt eine bevorzugte Einbausituation für die beiden Druckluftsysteme 12, 14 in einem bevorzugt als Nutzfahrzeug ausgeführten Kraftfahrzeug 44. Die Druckluftverbraucherkreise 24, 26, 38 und 40 sind nur rein schematisch dargestellt.

Das Kraftfahrzeug 44 weist einen Fahrzeugrahmen 46 auf, der bevorzugt als Leiterrahmen ausgeführt ist. Der Fahrzeugrahmen 46 kann bspw. ein Fahrerhaus 48 des Kraftfahrzeugs 44 abstützen.

Das erste Druckluftsystem 12 kann in einem vorderen Bereich des Kraftfahrzeugs 44, vorzugsweise einem Vorderwagen 50, angeordnet sein. Das zweite Druckluftsystem 14 kann in einem hinteren Bereich des Kraftfahrzeugs 44 angeordnet sein, vorzugsweise in einem Hinterwagen 52. Bevorzugt können die Druckluftsysteme 12, 14 jeweils zwischen und auf Höhe der beiden parallelen Hauptlängsträger des Fahrzeugrahmens 46 angeordnet sein. Es sind jedoch auch andere Anordnungen denkbar, z. B. seitlich außen an einem der Hauptlängsträger.

Der als Vorderachsbetriebsbremskreis ausgeführte Druckluftverbraucherkreis 24 weist beispielhaft mehrere Vorderachsbremszylinder 58 auf. Die Vorderachsbremszylinder 58 können zum Bremsen von dem ersten Druckluftsystem 12 mit Druckluft beaufschlagt werden.

Der als Hinterachsbetriebsbremskreis ausgeführte Druckluftverbraucherkreis 38 und der als Feststellbremskreiskreis ausgeführte Druckluftverbraucherkreis 40 weisen beispielhaft mehrere (z. B. Kombi-) Bremszylinder 60 auf. Die Hinterachsbremszylinder 60 können eine Feststellbremse lösen, wenn sie mit Druckluft von dem zweiten Druckluftsystem 14 beaufschlagt werden. Im unbetätigten bzw. drucklosen Zustand ist die Feststellbremse aktiviert. Eine Betriebsbremse der Hinterachsbremszylinder 60 kann zum Bremsen von dem zweiten Druckluftsystem 14 mit Druckluft beaufschlagt werden.

Die beiden Steuereinheiten 28, 42 können miteinander und/oder mit einer Hauptsteuereinheit 54 kommunizieren, z. B. über einen Fahrzeugbussystem (z. B. CAN-Bus). Die Hauptsteuereinheit 54 kann eine zentrale Steuereinheit eines elektronischen Bremssystems des Kraftfahrzeugs 44 sein.

Es ist möglich, dass die Druckluftsysteme 12, 14 fluidisch voneinander getrennt sind. Es ist allerdings auch möglich, dass die beiden Druckluftsysteme 12, 14 fluidisch miteinander mittels einer Druckluftverbindungsleitung 56 (nur schematisch in Figur 2 dargestellt) verbunden oder verbindbar sind. Bei einer Fehlfunktion eines der Druckluftsysteme 12 oder 14 könnte das jeweils andere Druckluftsystem somit Druckluft zu dem fehlerhaften Druckluftsystem fördern. Die Druckluftverbindungsleitung 56 kann bspw. in einen Leitungsabschnitt des ersten Druckluftsystems 12 stromaufwärts der ersten Ventileinrichtung 22 münden oder an die erste Ventileinrichtung 22 angeschlossen sein. Die Druckluftverbindungsleitung 56 kann bspw. in einen Leitungsabschnitt des zweiten Druckluftsystems 14 stromaufwärts der zweiten Ventileinrichtung 36 münden oder an die zweite Ventileinrichtung 36 angeschlossen sein. Es ist möglich, dass in der Druckluftverbindungsleitung 56 ein Absperrventil, ein Steuerventil und/oder ein Rückschlagventil angeordnet ist.

Die Druckluftverbindungsleitung 56 kann bidirektional betrieben werden, sodass wie gewünscht Druckluft zwischen dem ersten Druckluftsystem 12 und dem zweiten Druckluftsystem 14 hin- und/oder hergefördert werden kann. Es ist allerdings auch möglich, dass die Druckluftverbindungsleitung nur unidirektional betrieben werden kann. Beispielsweise könnte ein Rückschlagventil in oder an der Druckluftverbindungsleitung 56 angeordnet sein. Zum Beispiel könnte im Falle einer Fehlfunktion des zweiten Druckluftsystems 14 Druckluft von dem ersten Druckluftsystem 12 zu dem Druckluftsystem 14, insbesondere zu dem als Feststellbremskreis ausgeführten Druckluftverbraucherkreis 40, zugeführt werden, um zumindest die Feststellbremse lösen zu können.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Umfang der Erfindung, wie durch die Ansprüche definiert, Gebrauch machen.

### Bezugszeichenliste

- 10: Vorrichtung zur Drucklufterzeugung
- 12: Erstes Druckluftsystem
- 14: Zweites Druckluftsystem
- 16: Erster Luftverdichter
- 18: Erste Druckluftaufbereitung
- 20: Erster Druckluftspeicher
- 22: Erste Ventileinrichtung
- 24: Druckluftverbraucherkreis
- 26: Druckluftverbraucherkreis
- 28: Erste Steuereinheit
- 30: Zweiter Luftverdichter
- 32: Zweite Druckluftaufbereitung
- 34: Zweiter Druckluftspeicher
- 36: Zweite Ventileinrichtung
- 38: Druckluftverbraucherkreis
- 40: Druckluftverbraucherkreis
- 42: Zweite Steuereinheit
- 44: Kraftfahrzeug
- 46: Fahrzeugrahmen
- 48: Fahrerhaus
- 50: Vorderwagen
- 52: Hinterwagen
- 54: Hauptsteuereinheit
- 56: Druckluftverbindungsleitung
- 58: Vorderachsbremszylinder
- 60: Hinterachsbremszylinder

## Patentansprüche

1. Kraftfahrzeug (44), vorzugsweise Nutzfahrzeug, aufweisend:
ein erstes Druckluftsystem (12), das einen ersten elektrisch angetriebenen Luftverdichter (16), eine erste Druckluftaufbereitung (18) und eine erste Ventileinrichtung (22) aufweist;
ein zweites Druckluftsystem (14), das einen zweiten elektrisch angetriebenen Luftverdichter (30), eine zweite Druckluftaufbereitung (32) und eine zweite Ventileinrichtung (36) aufweist;
mindestens einen ersten Druckluftverbraucherkreis (24, 26), der an der ersten Ventileinrichtung (22) angeschlossen ist; und
mindestens einen zweiten Druckluftverbraucherkreis (38, 40), der an der zweiten Ventileinrichtung (36) angeschlossen ist.

2. Kraftfahrzeug (44) nach Anspruch 1, wobei:
der mindestens eine erste Druckluftverbraucherkreis (24, 26) einen Vorderachsbetriebsbremskreis und/oder einen Nebenverbraucherkreis, der vorzugsweise einer pneumatische Fahrerhauslagerung des Kraftfahrzeugs (44) und/oder einer pneumatisch betätigten Kupplung des Kraftfahrzeugs (44) zugeordnet ist, aufweist; und/oder
der mindestens eine zweite Druckluftverbraucherkreis (38, 40) einen Hinterachsbetriebsbremskreis und/oder einen Feststellbremskreis, vorzugsweise zusätzlich mit einem Anhängerbremskreis, aufweist.

3. Kraftfahrzeug (44) nach Anspruch 1 oder Anspruch 2, wobei:
die erste Ventileinrichtung (22) als ein Zweikreisschutzventil ausgeführt ist; und/oder
die zweite Ventileinrichtung (36) als ein Zweikreisschutzventil ausgeführt ist.

4. Kraftfahrzeug (44) nach einem der vorherigen Ansprüche, wobei:
das erste Druckluftsystem (12) und das zweite Druckluftsystem (14) fluidisch voneinander getrennt oder trennbar sind; und/oder
das erste Druckluftsystem (12) und das zweite Druckluftsystem (14) räumlich und/oder funktional voneinander getrennt angeordnet sind.

5. Kraftfahrzeug (44) nach einem der vorherigen Ansprüche, wobei.
das erste Druckluftsystem (12) in einem vorderen Bereich des Kraftfahrzeugs (44) oder einem Vorderwagen (50) des Kraftfahrzeugs (44) angeordnet ist, vorzugsweise zwischen zwei parallelen Hauptlängsträgern eines Fahrzeugrahmens (46) des Kraftfahrzeugs (44); und/oder
das zweite Druckluftsystem (14) in einem hinteren Bereich des Kraftfahrzeugs (44) oder einem Hinterwagen (52) des Kraftfahrzeugs (44) angeordnet ist, vorzugsweise zwischen zwei parallelen Hauptlängsträgern eines Fahrzeugrahmens (46) des Kraftfahrzeugs (44).

6. Kraftfahrzeug (44) nach einem der vorherigen Ansprüche, wobei:
der erste Luftverdichter (16) und/oder der zweite Luftverdichter (30) als ein Niedrigvolt-Luftverdichter ausgeführt ist, vorzugsweise mit einer Betriebsspannung ≤ 60 V Gleichspannung.

7. Kraftfahrzeug (44) nach einem der vorherigen Ansprüche, ferner aufweisend:
eine, vorzugsweise bidirektionale oder unidirektionale, Druckluftverbindungsleitung (56), mittels der das erste Druckluftsystem (12) und das zweite Druckluftsystem (14) miteinander verbindbar sind, vorzugsweise ventilgesteuert.

8. Kraftfahrzeug (44) nach Anspruch 7, wobei:
die Druckluftverbindungsleitung (56) in einen Leitungsabschnitt des ersten Druckluftsystems (12) stromaufwärts der ersten Ventileinrichtung (22) mündet oder an die erste Ventileinrichtung (22) angeschlossen ist; und/oder
die Druckluftverbindungsleitung (56) in einen Leitungsabschnitt des zweiten Druckluftsystems (14) stromaufwärts der zweiten Ventileinrichtung (36) mündet oder an die zweite Ventileinrichtung (36) angeschlossen ist.

9. Kraftfahrzeug (44) nach Anspruch 7 oder Anspruch 8, wobei:
der mindestens eine erste Druckluftverbraucherkreis (24, 26) bei einer Fehlfunktion des ersten Druckluftsystems (12) mittels der Druckluftverbindungsleitung (56) von dem zweiten Druckluftsystem (14) mit Druckluft versorgbar ist; und/oder
der mindestens eine zweite Druckluftverbraucherkreis (38, 40) bei einer Fehlfunktion des zweiten Druckluftsystems (14) mittels der Druckluftverbindungsleitung (56) von dem ersten Druckluftsystem (12) mit Druckluft versorgbar ist.

10. Kraftfahrzeug (44) nach einem der vorherigen Ansprüche, wobei:
das erste Druckluftsystem (12) eine erste Teilsteuereinheit (28) einer elektronischen Bremssteuerung zum Steuern des ersten Luftverdichters (16) und/oder der ersten Ventileinrichtung (22) aufweist; und
das zweite Druckluftsystem (14) eine zweite Teilsteuereinheit (42) einer elektronischen Bremssteuerung zum Steuern des zweiten Luftverdichters (30) und/oder der zweiten Ventileinrichtung (36) aufweist.

11. Kraftfahrzeug (44) nach Anspruch 10, ferner aufweisend:
eine Hauptsteuereinheit (54) der elektronischen Bremssteuerung, die in Kommunikationsverbindung mit der ersten Teilsteuereinheit (28) und der zweiten Teilsteuereinheit (42) ist.

12. Kraftfahrzeug (44) nach einem der vorherigen Ansprüche, wobei:
das erste Druckluftsystem (12) als ein eigenes bauliches Modul, das in dem Kraftfahrzeug (44) eingebaut ist, ausgeführt ist; und/oder
das zweite Druckluftsystem (14) als ein eigenes bauliches Modul, das in dem Kraftfahrzeug (44) eingebaut ist, ausgeführt ist.

13. Kraftfahrzeug (44) nach einem der vorherigen Ansprüche, wobei:
das erste Druckluftsystem (12) ferner einen ersten Druckluftspeicher (20), der vorzugsweise einem Vorderachsbetriebsbremskreis des Kraftfahrzeugs (44) zugeordnet ist, aufweist; und/oder
das zweite Druckluftsystem (14) ferner einen zweiten Druckluftspeicher (34), der vorzugsweise einem Hinterachsbetriebsbremskreis und/oder einem Anhängerbremskreis des Kraftfahrzeugs (44) zugeordnet ist, aufweist.

14. Verfahren zur Druckluftversorgung eines Kraftfahrzeugs (44) nach einem der vorherigen Ansprüche, aufweisend:
Versorgen des mindestens einen ersten Druckluftverbraucherkreises (26, 28) mittels des ersten Druckluftsystems (12); und
Versorgen des mindestens einen zweiten Druckluftverbraucherkreises (38, 40) mittels des zweiten Druckluftsystems (14).

15. Verfahren nach Anspruch 14, ferner aufweisend:
Versorgen des mindestens einen ersten Druckluftverbraucherkreises (24, 26) mittels des zweiten Druckluftsystems (14) bei einer Fehlfunktion des ersten Druckluftsystems (12); und/oder
Versorgen des mindestens einen zweiten Druckluftverbraucherkreises (38, 40) mittels des ersten Druckluftsystems (12) bei einer Fehlfunktion des zweiten Druckluftsystems (14).

## Claims

1. Motor vehicle (44), preferably commercial vehicle, comprising:
a first compressed air system (12) comprising a first electrically driven air compressor (16), a first compressed air treatment unit (18), and a first valve device (22);
a second compressed air system (14) comprising a second electrically driven air compressor (30), a second compressed air treatment unit (32), and a second valve device (36)
at least one first compressed air consumer circuit (24, 26) connected to the first valve device (22); and
at least one second compressed air consumer circuit (38, 40) connected to the second valve device (36).

2. Motor vehicle (44) according to claim 1, wherein:
the at least one first compressed air consumer circuit (24, 26) comprises a front axle service brake circuit and/or an auxiliary consumer circuit, preferably associated with a pneumatic cab mounting of the motor vehicle (44) and/or a pneumatically actuated clutch of the motor vehicle (44); and/or
the at least one second compressed air consumer circuit (38, 40) comprises a rear axle service brake circuit and/or a parking brake circuit, preferably additionally with a trailer brake circuit.

3. Motor vehicle (44) according to claim 1 or claim 2, wherein:
the first valve device (22) is configured as a dual circuit protection valve; and/or
the second valve device (36) is configured as a dual circuit protection valve.

4. Motor vehicle (44) according to any one of the preceding claims, wherein:
the first compressed air system (12) and the second compressed air system (14) are fluidically separated or separable from one another; and/or
the first compressed air system (12) and the second compressed air system (14) are spatially and/or functionally separated from each other.

5. Motor vehicle (44) according to any one of the preceding claims, wherein:
the first compressed air system (12) is arranged in a front region of the motor vehicle (44) or a front end (50) of the motor vehicle (44), preferably between two parallel main longitudinal members of a vehicle frame (46) of the motor vehicle (44); and/or
the second compressed air system (14) is arranged in a rear area of the motor vehicle (44) or a rear end (52) of the motor vehicle (44), preferably between two parallel main longitudinal members of a vehicle frame (46) of the motor vehicle (44).

6. Motor vehicle (44) according to any one of the preceding claims, wherein:
the first air compressor (16) and/or the second air compressor (30) is configured as a low-voltage air compressor, preferably with an operating voltage ≤ 60 V DC.

7. Motor vehicle (44) according to any one of the preceding claims, further comprising:
a, preferably bidirectional or unidirectional, compressed air connection line (56) by which the first compressed air system (12) and the second compressed air system (14) are connectable to each other, preferably valve-controlled.

8. Motor vehicle (44) according to claim 7, wherein:
the compressed air connection line (56) opens into a line section of the first compressed air system (12) upstream of the first valve device (22) or is connected to the first valve device (22); and/or
the compressed air connection line (56) opens into a line section of the second compressed air system (14) upstream of the second valve device (36) or is connected to the second valve device (36).

9. Motor vehicle (44) according to claim 7 or claim 8, wherein:
the at least one first compressed air consumer circuit (24, 26) is supplyable with compressed air from the second compressed air system (14) by means of the compressed air connection line (56) in the event of a malfunction of the first compressed air system (12); and/or
the at least one second compressed air consumer circuit (38, 40) is supplyable with compressed air from the first compressed air system (12) by means of the compressed air connection line (56) in the event of a malfunction of the second compressed air system (14).

10. Motor vehicle (44) according to any one of the preceding claims, wherein:
the first compressed air system (12) comprises a first sub-control unit (28) of an electronic brake control for controlling the first air compressor (16) and/or the first valve device (22); and
the second compressed air system (14) comprises a second sub-control unit (42) of an electronic brake control for controlling the second air compressor (30) and/or the second valve device (36).

11. Motor vehicle (44) of claim 10, further comprising:
a main control unit (54) of the electronic brake control in communication with the first sub-control unit (28) and the second sub-control unit (42).

12. Motor vehicle (44) according to any one of the preceding claims, wherein:
the first compressed air system (12) is configured as a separate structural module installed in the motor vehicle (44); and/or
the second compressed air system (14) is configured as a separate structural module installed in the motor vehicle (44).

13. Motor vehicle (44) according to any one of the preceding claims, wherein:
the first compressed air system (12) further comprising a first compressed air reservoir (20), preferably associated with a front axle service brake circuit of the motor vehicle (44); and/or
the second compressed air system (14) further comprises a second compressed air reservoir (34), preferably associated with a rear axle service brake circuit and/or a trailer brake circuit of the motor vehicle (44).

14. Method of supplying compressed air to a motor vehicle (44) according to any one of the preceding claims, comprising:
supplying the at least one first compressed air consumer circuit (26, 28) by the first compressed air system (12); and
supplying the at least one second compressed air consumer circuit (38, 40) by the second compressed air system (14).

15. Method of claim 14, further comprising:
supplying the at least one first compressed air consumer circuit (24, 26) by the second compressed air system (14) in the event of a malfunction of the first compressed air system (12); and/or
supplying the at least one second compressed air consumer circuit (38, 40) by the first compressed air system (12) in the event of a malfunction of the second compressed air system (14).

## Revendications

1. Véhicule automobile (44), de préférence un véhicule utilitaire, comprenant :
un premier système d'air comprimé (12) qui présente un premier compresseur d'air (16) à entraînement électrique, un premier traitement d'air comprimé (18) et un premier dispositif de soupape (22) ;
un deuxième système d'air comprimé (14), qui présente un deuxième compresseur d'air (30) à entraînement électrique, un deuxième traitement d'air comprimé (32) et un deuxième dispositif de soupape (36) ;
au moins un premier circuit consommateur d'air comprimé (24, 26) raccordé au premier dispositif de soupape (22) ; et
au moins un deuxième circuit consommateur d'air comprimé (38, 40) raccordé au deuxième dispositif de soupape (36).

2. Véhicule automobile (44) selon la revendication 1, dans lequel :
ledit au moins un premier circuit consommateur d'air comprimé (24, 26) comporte un circuit de freinage de service de l'essieu avant et/ou un circuit consommateur secondaire associé de préférence à une suspension pneumatique de cabine du véhicule automobile (44) et/ou à un embrayage à commande pneumatique du véhicule automobile (44) ; et/ou
ledit au moins un deuxième circuit consommateur d'air comprimé (38, 40) comprend un circuit de freinage de service de l'essieu arrière et/ou un circuit de freinage de stationnement, de préférence comprenant en outre un circuit de freinage de remorque.

3. Véhicule automobile (44) selon la revendication 1 ou la revendication 2, dans lequel :
le premier dispositif de soupape (22) est réalisé sous la forme d'une soupape de protection à deux circuits ; et/ou
le deuxième dispositif de soupape (36) est réalisé sous la forme d'une soupape de protection à deux circuits.

4. Véhicule automobile (44) selon l'une des revendications précédentes, dans lequel :
le premier système d'air comprimé (12) et le deuxième système d'air comprimé (14) sont séparés ou séparables l'un de l'autre par voie fluidique ; et/ou le premier système d'air comprimé (12) et le deuxième système d'air comprimé (14) sont disposés de manière à être séparés d'un point de vue spatial et/ou fonctionnel l'un de l'autre.

5. Véhicule automobile (44) selon l'une des revendications précédentes, dans lequel
le premier système d'air comprimé (12) est disposé dans une zone avant du véhicule automobile (44) ou dans un avant-train (50) du véhicule automobile (44), de préférence entre deux longerons principaux parallèles d'un châssis de véhicule (46) du véhicule automobile (44) ; et/ou
le deuxième système d'air comprimé (14) est disposé dans une zone arrière du véhicule automobile (44) ou dans un arrière-train (52) du véhicule automobile (44), de préférence entre deux longerons principaux parallèles d'un châssis de véhicule (46) du véhicule automobile (44).

6. Véhicule automobile (44) selon l'une des revendications précédentes, dans lequel :
le premier compresseur d'air (16) et/ou le deuxième compresseur d'air (30) est réalisé sous la forme d'un compresseur d'air basse tension, de préférence avec une tension de fonctionnement continue ≤ 60 V.

7. Véhicule automobile (44) selon l'une des revendications précédentes, comprenant en outre :
une interconnexion d'air comprimé (56), de préférence bidirectionnelle ou unidirectionnelle, au moyen de laquelle le premier système d'air comprimé (12) et le deuxième système d'air comprimé (14) peuvent être reliés entre eux, de préférence par une soupape.

8. Véhicule automobile (44) selon la revendication 7, dans lequel :
l'interconnexion d'air comprimé (56) débouche dans une section de conduite du premier système d'air comprimé (12) en amont du premier dispositif de soupape (22) ou est raccordée au premier dispositif de soupape (22) ; et/ou
la conduite de liaison d'air comprimé (56) débouche dans une section de conduite du deuxième système d'air comprimé (14) en amont du deuxième dispositif de soupape (36) ou est raccordée au deuxième dispositif de soupape (36) .

9. Véhicule automobile (44) selon la revendication 7 ou la revendication 8, dans lequel :
ledit au moins un premier circuit consommateur d'air comprimé (24, 26) peut être alimenté en air comprimé par le deuxième système d'air comprimé (14) au moyen de l'interconnexion d'air comprimé (56) en cas de dysfonctionnement du premier système d'air comprimé (12) ; et/ou
ledit au moins un deuxième circuit consommateur d'air comprimé (38, 40) peut être alimenté en air comprimé par le premier système d'air comprimé (12) au moyen de l'interconnexion d'air comprimé (56) en cas de dysfonctionnement du deuxième système d'air comprimé (14).

10. Véhicule automobile (44) selon l'une des revendications précédentes, dans lequel :
le premier système d'air comprimé (12) comprend une première unité de commande partielle (28) d'une commande de freinage électronique pour commander le premier compresseur d'air (16) et/ou le premier dispositif de soupape (22) ; et
le deuxième système d'air comprimé (14) comprend une deuxième unité de commande partielle (42) d'une commande électronique de freinage pour commander le deuxième compresseur d'air (30) et/ou le deuxième dispositif de soupape (36).

11. Véhicule automobile (44) selon la revendication 10, comprenant en outre :
une unité de commande principale (54) de la commande électronique de freinage qui est en liaison de communication avec la première unité de commande partielle (28) et la deuxième unité de commande partielle (42) .

12. Véhicule automobile (44) selon l'une des revendications précédentes, dans lequel :
le premier système d'air comprimé (12) est réalisé sous la forme d'un module de construction propre qui est monté dans le véhicule automobile (44) ; et/ou
le deuxième système d'air comprimé (14) est réalisé sous la forme d'un module de construction propre qui est monté dans le véhicule automobile (44).

13. Véhicule automobile (44) selon l'une des revendications précédentes, dans lequel :
le premier système d'air comprimé (12) comprend en outre un premier réservoir d'air comprimé (20), qui est de préférence associé à un circuit de freinage de service de l'essieu avant du véhicule automobile (44) ; et/ou
le deuxième système d'air comprimé (14) comporte en outre un deuxième réservoir d'air comprimé (34) qui est de préférence associé à un circuit de freinage de service de l'essieu arrière et/ou à un circuit de freinage de remorque du véhicule automobile (44).

14. Procédé d'alimentation en air comprimé d'un véhicule automobile (44) selon l'une des revendications précédentes, comprenant :
l'alimentation d'au moins un dudit premier circuit consommateur d'air comprimé (26, 28) au moyen du premier système d'air comprimé (12) ; et
l'alimentation d'au moins un dudit deuxième circuit consommateur d'air comprimé (38, 40) au moyen du deuxième système d'air comprimé (14).

15. Procédé selon la revendication 14, comprenant en outre :
l'alimentation d'au moins un dudit premier circuit consommateur d'air comprimé (24, 26) au moyen du deuxième système d'air comprimé (14) en cas de dysfonctionnement du premier système d'air comprimé (12) ; et/ou
l'alimentation d'au moins un dudit deuxième circuit consommateur d'air comprimé (38, 40) au moyen du premier système d'air comprimé (12) en cas de dysfonctionnement du deuxième système d'air comprimé (14).
